# EUROPEAN PATENT SPECIFICATION

(11) **EP 4 030 066 B1**
(45) Date of publication and mention of the grant of the patent: **17.01.2024**
(21) Application number: 21192043.4
(22) Date of filing: 19.08.2021
(51) Int. Cl.: F04D 29/056, F16C 27/06, F04D 17/04, F04D 9/06, F04D 29/06, F16C 17/02, F16C 27/02, F16C 33/10, F24F 1/0025

(54) **ROTARY SHAFT SLEEVE FOR CROSS-FLOW FAN OF AIR CONDITIONER AND AIR CONDITIONER**
DREHWELLENHÜLSE FÜR QUERSTROMLÜFTER EINER KLIMAANLAGE SOWIE KLIMAANLAGE
MANCHON D'ARBRE ROTATIF POUR VENTILATEUR TANGENTIEL DE CLIMATISEUR ET CLIMATISEUR

(30) Priority: 13.01.2021 CN 202120085778 U
(43) Date of publication of application: 20.07.2022
(73) Proprietor: Beijing Xiaomi Mobile Software Co., Ltd., Beijing 100085 (CN)
(72) Inventor: SHAN, Lianyu, Beijing 100085 (CN)
(74) Representative: dompatent von Kreisler Selting Werner - Partnerschaft von Patent- und Rechtsanwälten mbB

(56) References cited:
- EP-A1- 2 682 620
- CN-U- 211 400 073
- DE-U1-202008 001 613
- US-A- 3 250 579

## Description

### FIELD

This application relates to the field of rotary shaft sleeves for fan blades, and more particularly, to a rotary shaft sleeve for a cross-flow fan of an air conditioner and an air conditioner.

### BACKGROUND

Cross-flow fans of air conditioners are driven to rotate by a single motor. Due to driving characteristics of a single motor, one end of the cross-flow fan is connected to a rotary shaft sleeve of the motor, while the other end thereof is separately mounted inside the air conditioner, and the motor can bring the cross-flow fan into rotation by means of the rotary shaft sleeve. The air conditioners generally adopt rubber-wrapped bearings, but the bearings will wear out over time, which is inconvenient to maintain and repair; a damping effect of solid rubber is not obvious when the cross-flow fan vibrates during operation of the air conditioner; and the bearings need to be oiled regularly. The present application aims to optimize air conditioners and to avoid the above problems. Accordingly, it is necessary to provide a rotary shaft sleeve for a cross-flow fan of an air conditioner, to at least partially solve the problems in the related art.

CN211400073U discloses a window type air conditioner which comprises a machine shell, a volute, a cross-flow wind wheel and a bearing, the volute is arranged in the machine shell, the volute comprises a first volute body and a second volute body which are spliced with each other, and an indoor heat exchange air duct is defined between the first volute body and the second volute body. A rotating shaft is convexly arranged at one end of the cross-flow wind wheel; the bearing is installed at the splicing position of the first volute and the second volute, the bearing comprises a flexible bearing seat and bearing particles installed in the flexible bearing seat, and the rotating shaft is rotationally connected to the bearing particles. According to the window type air conditioner, the service life of the flexible bearing pedestal can be prolonged, vibration and noise are reduced, abnormal sounds are eliminated, and the bearing is convenient to disassemble and assemble.

### SUMMARY

A series of simplified concepts are introduced in this section and will be further explained in specific embodiments. The summary of the present disclosure is not intended to define key features and necessary technical features of the claimed technical solutions, or to determine the protection scope of the claimed technical solutions.

In order to at least partially solve the above problems, the present disclosure provides a rotary shaft sleeve for a cross-flow fan of an air conditioner. The rotary shaft sleeve is as defined in current claim 1.

Preferably, the buffering member includes: an inserting portion inserted within the clamping seat, the fixing member being arranged in the inserting portion; a clamping portion. A top surface of the clamping portion is connected to a bottom surface of the inserting portion, a side wall of the clamping portion is clamped with the four sloped stops, and a bottom surface of the clamping portion is in contact with the top surfaces of the clamping plates; and an oil-replenishing portion arranged in a center of the bottom surface of the clamping portion.

Preferably, a plurality of first bosses are arranged on an outer side wall of the inserting portion, and the inserting portion is inserted into the clamping seat through the plurality of first bosses; the inserting portion has a first through hole, and the first through hole runs through the inserting portion and the clamping portion and extends to an inner and lower bottom surface of the oil-replenishing portion.

Preferably, a plurality of buffering grooves are formed in an upper surface of the inserting portion, and surround an outer side of the first through hole with the first through hole as a center; a fixing cavity is formed within the inserting portion, and the fixing cavity is drum-shaped; a plurality of second bosses are arranged on an inner surface of the fixing cavity, and the fixing member is clamped in the fixing cavity by the plurality of the second bosses.

Preferably, a clamping groove is arranged in an outer wall of the clamping portion, a lower part of the clamping groove is tapered inwards, and the four sloped stops are clamped in the clamping groove; the oil-replenishing portion is cylindrical, a top surface of the oil-replenishing portion is connected to the bottom surface of the clamping portion, and an oil injection hole is arranged in a bottom of the oil-replenishing portion.

Preferably, the fixing member includes: a fixing sleeve having a drum-shaped structure, an outer side wall of the fixing sleeve being clamped in the fixing cavity through the plurality of second bosses; and a sleeve cover arranged on a lower surface of the fixing sleeve, in which a second through hole is formed in a center of the fixing member, has a diameter equal to a diameter of the first through hole, and runs through the fixing member.

Preferably, three first oil storage bins are arranged within the fixing sleeve and in communication with the second through hole; the three first oil storage bins are evenly arranged around the second through hole, and extend from a bottom surface of the fixing sleeve to an interior of the fixing sleeve.

Preferably, the fixing member includes: an outer shaft sleeve, an outer shape of the outer shaft sleeve being drum-shaped, and an outer side wall of the outer shaft sleeve being clamped in the fixing cavity through the plurality of second bosses; and an inner shaft sleeve arranged in the outer shaft sleeve, in which the inner shaft sleeve is of a circular tube structure and runs through the outer shaft sleeve, an inner diameter of the inner shaft sleeve is equal to a diameter of the first through hole, and the inner shaft sleeve is slidably connected to the outer shaft sleeve.

Preferably, three second oil storage bins are arranged within the outer shaft sleeve and in communication with an outer wall of the inner shaft sleeve; the three second oil storage bins are evenly arranged around the inner shaft sleeve; and three oil-replenishing openings are arranged at a lower end of the outer shaft sleeve and correspond to the second oil storage bins.

Preferably, the clamping member is made of plastics; the buffering member, the first bosses and the second bosses are all made of rubber; and the fixing member is made of stainless steel.

Preferably, the fixing member is in an interference fit with the fixing cavity, and the inserting portion is in an interference fit with the clamping seat.

Preferably, the first oil storage bins are filled with lubricating grease.

Preferably, the second oil storage bins are filled with lubricating grease.

The present disclosure also provides an air conditioner including a cross-flow fan, in which an end of the cross-flow fan is provided with a rotary shaft sleeve, and the rotary shaft sleeve is the above-mentioned rotary shaft sleeve for the cross-flow fan of the air conditioner in the present disclosure.

Compared with the related art, the present disclosure at least includes following beneficial effects.

Through the rotary shaft sleeve for the cross-flow fan of the air conditioner and the air conditioner according to the present disclosure, the fixing member can be mounted into the buffering member conveniently, and the fixing member has a function of oil storage to address a problem of insufficient lubrication caused by long-time use and does not have to be disassembled when lubricating grease needs to be replenished, since the lubricating grease may be directly replenished through the buffering member. When the cross-flow fan vibrates due to non-concentricity or eccentricity, the buffering member may also play a role of shock absorption and cushioning. The buffering member may be deformed over time, since it is pressed by the cross-flow fan for a long time. However, through an internal design of the buffering member, an axis of rotation of the fixing member may still be on the same axis with the shaft of the cross-flow fan when deformation occurs, thus reducing the wear of the shaft and the rotary shaft sleeve caused by sinking of the buffering member over time. The clamping member is arranged on the inner unit of the air conditioner and may be disassembled at any time, which is convenient for the mounting and subsequent maintenance of the rotary shaft sleeve and the cross-flow fan.

Other advantages, objectives and features of the rotary shaft sleeve for the cross-flow fan and the air conditioner of the present disclosure will become apparent in part from the following descriptions, or be appreciated by those skilled in the art from the study and practice of the embodiments of the present disclosure.

### BRIEF DESCRIPTION OF DRAWINGS

The accompanying drawings provide further understanding of the present disclosure and constitute part of the present disclosure. The accompanying drawings are used to explain the present disclosure together with embodiments of the present disclosure, rather than to limit the present disclosure.
FIG. 1 is a schematic view of a first technical solution of a rotary shaft sleeve for a cross-flow fan of an air conditioner according to the present disclosure.
FIG. 2 is a schematic view of a clamping member in the rotary shaft sleeve for the cross-flow fan of the air conditioner according to the present disclosure.
FIG. 3 is a schematic view of an external structure of a buffering member in the rotary shaft sleeve for the cross-flow fan of the air conditioner according to the present disclosure.
FIG. 4 is a sectional view of the buffering member in the rotary shaft sleeve for the cross-flow fan of the air conditioner according to the present disclosure.
FIG. 5 is a schematic view of a fixing member in the first technical solution of the rotary shaft sleeve for the cross-flow fan of the air conditioner according to the present disclosure.
FIG. 6 is a schematic view of an external structure of a fixing member in a second technical solution of the rotary shaft sleeve for the cross-flow fan of the air conditioner according to the present disclosure.
FIG. 7 is a sectional view of the fixing member in the second technical solution of the rotary shaft sleeve for the cross-flow fan of the air conditioner according to the present disclosure.

Reference numerals: 1 clamping member, 11 clamping seat, 12 clamping plate, 13 sloped stop, 2 buffering member, 21 inserting portion, 211 fixing cavity, 22 clamping portion, 23 oil-replenishing portion, 3 fixing member, 31 fixing sleeve, 311 first oil storage bin, 32 sleeve cover, 33 outer shaft sleeve, 331 second oil storage bin, 34 inner shaft sleeve.

### DETAILED DESCRIPTION

The present disclosure will be further described in detail below in combination with the accompanying drawings and embodiments, such that those skilled in the art may implement the present disclosure with reference to the contents of the present disclosure.

It should be understood that terms such as "having," "including," and "comprising" as used herein do not exclude existence or addition of one or more other elements or combinations thereof.

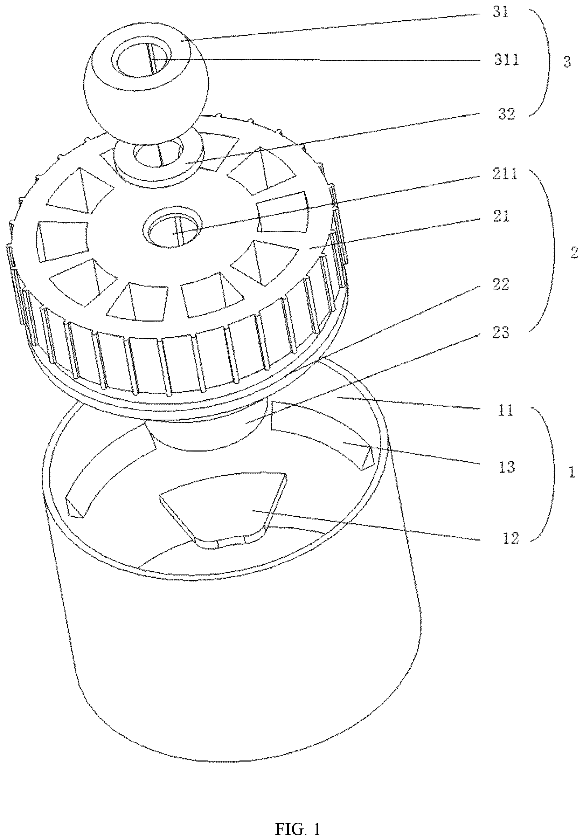

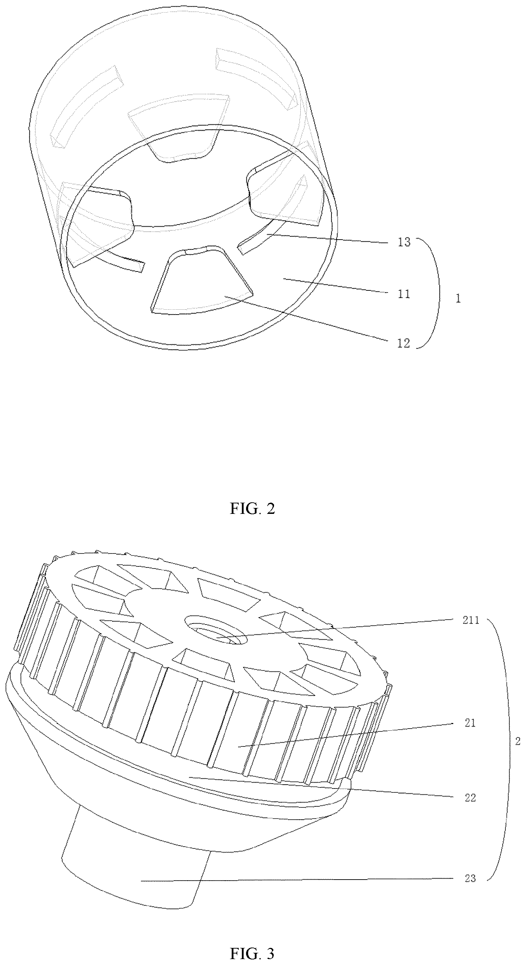

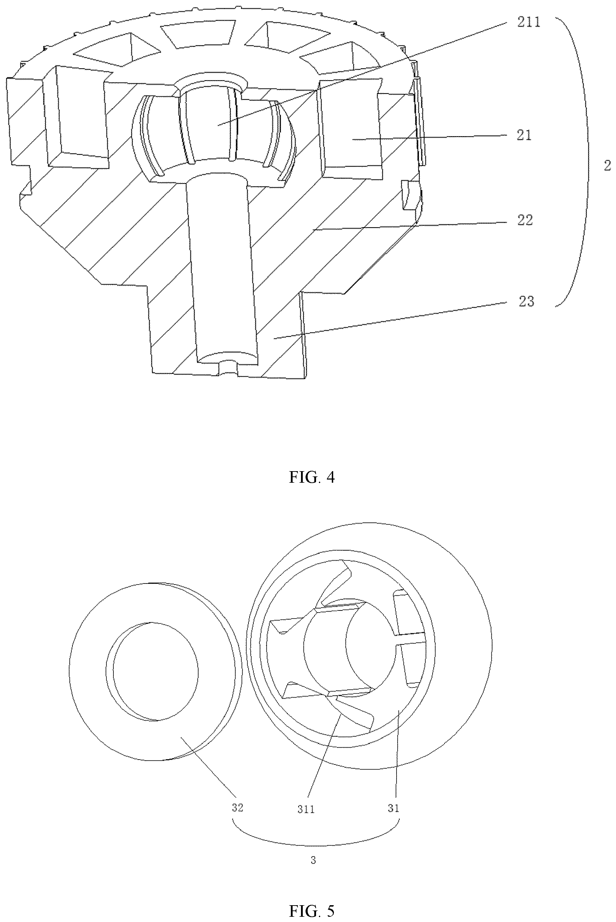

As illustrated in FIGS. 1-7, the present disclosure provides a rotary shaft sleeve for a cross-flow fan of an air conditioner. The rotary shaft sleeve includes a clamping member 1, a buffering member 2, and a fixing member 3. The clamping member 1 is arranged in an indoor unit of the air conditioner, the buffering member 2 is arranged inside the clamping member 1, and the fixing member 3 is arranged inside the buffering member 2.

The working principle of the above technical solution is as follows: the clamping member 1 is arranged on the inner unit of the air conditioner to provide support for fixation of the cross-flow fan; the buffering member 2 is then inserted into the clamping member 1, such that the clamping member 1 may clamp the buffering member 2 to prevent it from displacement and deflection during rotation; before mounting the buffering member 2, the fixing member 3 should be mounted inside the buffering member 2, and the fixing member 3 is tightly clamped by the buffering member 2 to prevent its rotation. The fixing member 3 mainly acts to limit a position of a shaft of the cross-flow fan, and the shaft of the cross-flow fan may slide and rotate inside the fixing member 3. The buffering member 2 may play a role of buffering when the cross-flow fan vibrates. Moreover, when the cross-flow fan presses the buffering member 2 for a long time, causing deformation of the buffering member 2, an axis of rotation of the fixing member 3 may still be in a same horizontal axis with the shaft of the cross-flow fan, without position deviation, thus reducing wear and increasing the service life of the whole rotary shaft sleeve.

The above technical solution has the following beneficial effects. Through the above structural design, the fixing member 3 can be mounted into the buffering member 2 conveniently, and the fixing member 3 has a function of oil storage to address a problem of insufficient lubrication caused by long-time use and does not have to be disassembled when lubricating grease needs to be replenished, since the lubricating grease may be directly replenished through the buffering member 2. When the cross-flow fan vibrates due to non-concentricity or eccentricity, the buffering member 2 may also play a role of shock absorption and cushioning. The buffering member 2 may be deformed over time, since it is pressed by the cross-flow fan for a long time. However, through an internal design of the buffering member 2, the axis of rotation of the fixing member 3 may still be on the same axis with the shaft of the cross-flow fan when deformation occurs, thus reducing the wear of the shaft and the rotary shaft sleeve caused by sinking of the buffering member over time. The clamping member 1 is arranged on the inner unit of the air conditioner and may be disassembled at any time, which is convenient for the mounting and subsequent maintenance of the rotary shaft sleeve and the cross-flow fan.

In an embodiment, the clamping member 1 includes a clamping seat 11, four clamping plates 12, and four sloped stops 13. Each sloped stop 13 is arranged on an inner wall of the clamping seat 11, and a slope gradient of the sloped stop 13 increases from top to bottom. The four sloped stops 13 are on a same horizontal plane and evenly distributed on the inner wall of the clamping seat 11. The clamping plates 12 are arranged on the inner wall of the clamping seat 11 and located below the sloped stops 13. The four clamping plates 12 are on a same horizontal plane and evenly distributed on the inner wall of the clamping seat 11. The buffering member 2 is arranged in the clamping seat 11 and clamped with the sloped stops 13, and top surfaces of the clamping plates 12 are in contact with a bottom surface of the buffering member 2.

The working principle of the above technical solution is as follows: when the buffering member 2 is inserted into the clamping seat 11, an upper end of the clamping seat 11 will be clamped with the buffering member 2 to realize the first position limitation; as the buffering member 2 continues to be inserted into the clamping seat 11, the buffering member 2 will be stuck by the four sloped stops 13 and cannot be pulled out; and meanwhile a bottom of the buffering member 2 will be blocked by four large clamping plates 12, and thus cannot be inserted further down, which realizes the second position limitation of the buffering member 2 by the clamping seat 11.

The above technical solution has the following beneficial effects. Through the above structural design, a lower end of the buffering member 2 may be clamped by the clamping seat 11 to fix the position of the buffering member 2 in a horizontal direction and prevent rotation of the buffering member 2 as well; the sloped stops 13 and the clamping plates 12 may fix the buffering member 2 in a vertical direction to prevent the buffering member from moving up and down. In such a way, the position limitation of the buffering member 2 is completed.

In an embodiment, the buffering member 2 includes an inserting portion 21, a clamping portion 22, and an oil-replenishing portion 23. The inserting portion 21 is inserted within the clamping seat 11. The fixing member 3 is arranged in the inserting portion 21. Atop surface of the clamping portion 22 is connected to a bottom surface of the inserting portion 21, a side wall of the clamping portion 22 is clamped with the four sloped stops 13, and a bottom surface of the clamping portion 22 is in contact with the top surfaces of the clamping plates 12. The oil-replenishing portion 23 is arranged in a center of the bottom surface of the clamping portion 22.

The working principle of the above technical solution is as follows: the inserting portion 21, the clamping portion 22, and the oil-replenishing portion 23 are connected as a whole; when the buffering member 2 is inserted into the clamping member 1, the oil-replenishing portion 23, the clamping portion 22, and the inserting portion 21 sequentially enter the clamping seat 11; since a diameter of the oil-replenishing portion 23 is smaller than a gap area enclosed by top ends of the four clamping plates 12, the oil-replenishing portion 23 may directly pass through the clamping plates 12 during insertion; then the bottom surface of the clamping portion 22 will be blocked by the clamping plates 12 to prevent the buffering member 2 from being inserted further down; while the bottom surface of the clamping portion 22 is blocked by the clamping plates 12, the sloped stops 13 may be clamped into the clamping portion 22 to prevent the buffering member 2 from being pulled out upwards; when the clamping portion 22 is clamped, the inserting portion 21 is also completely inserted into the clamping seat 11, thereby completing fixation of the position.

The above technical solution has the following beneficial effects. Through the above structural design, the insertion and clamping processes may be carried out simultaneously, and through the cooperation of the clamping plates 12 and the sloped stops 13, the buffering member 2 will not be inserted too deep or slide upwards. The integrated design enables the buffering member 2 to have both insertion and clamping connection modes, greatly improving the tightness of connection between the buffering member 2 and the clamping member 1 to prevent the position deviation.

In an embodiment, a plurality of first bosses are arranged on an outer side wall of the inserting portion 21. The inserting portion 21 is inserted into the clamping seat 11 through the plurality of first bosses. The inserting portion 21 has a first through hole, which runs through the inserting portion 21 and the clamping portion 22 and extends to an inner and lower bottom surface of the oil-replenishing portion 23. A plurality of buffering grooves are formed in an upper surface of the inserting portion 21, and surround an outer side of the first through hole with the first through hole as a center. A fixing cavity 211 is formed within the inserting portion 21, and the fixing cavity 211 is drum-shaped, i.e., a substantially cylindrical shape but with a cross section of the fixing cavity 211 gradually decreasing from a middle part to both ends. A plurality of second bosses are arranged on an inner surface of the fixing cavity 211, and the fixing member 3 is clamped in the fixing cavity 211 by the plurality of the second bosses.

The working principle of the above technical solution is as follows: the first bosses increase an outer diameter of the inserting portion 21, such that the outer diameter of the inserting portion 21 is slightly larger than an outer diameter of the clamping seat 11, and force exerted on the inserting portion will be increased to prevent the inserting portion 21 from rotating and sliding out after being inserted. Similarly, the second bosses inside the fixing cavity 211 also increase force between the fixing cavity 211 and the fixing member 3 to prevent sliding. The first through hole is configured to place the shaft of the cross-flow fan, and the first through hole extends to the inner bottom surface of the oil-replenishing portion 23, such that a part of the shaft of the cross-flow fan may be inserted into the oil-replenishing portion 23 to prevent the shaft of the cross-flow fan from separating from the fixing member 3 and the buffering member 2 due to axial movement. The buffering groove can play a role in absorbing and cushioning the vibration of the cross-flow fan due to non-concentricity or eccentricity, and the design of the buffering groove enables the fixing member 3 and the shaft of the cross-flow fan to swing together, so as to prevent a situation that the axis of rotation of the fixing member 3 and the shaft of the cross-flow fan are not on the same axis, thereby reducing the wear.

The above technical solution has the following beneficial effects. Through the above structural design, the outer diameter of the inserting portion 21 and the outer diameter of the fixing member 3 are increased by the first bosses and the second bosses respectively, such that the inserting portion 21 and the fixing member 3 are subjected to greater pressure and friction when inserted and fixed, to prevent the buffering member 2 and the fixing member 3 from rotating by themselves. The design of the buffering groove can play a role in absorbing and cushioning the vibration of the cross-flow fan in the case of non-concentricity or eccentricity, and ensure that the shaft of the cross-flow fan and the axis of rotation of the fixing member 3 are always on the same axis, thereby reducing the wear.

In an embodiment, a clamping groove is arranged in an outer wall of the clamping portion 22, a lower part of the clamping groove is tapered inwards, and four sloped stops 13 are clamped in the clamping groove. The oil-replenishing portion 23 is cylindrical, a top surface of the oil-replenishing portion 23 is connected to the bottom surface of the clamping portion 22, and an oil injection hole is arranged in a bottom of the oil-replenishing portion 23.

The working principle and beneficial effects of the above technical solution are as follows. Through the above structural design, the clamping groove is arranged to clamp the sloped stops 22; the oil injection hole at the bottom of the oil-replenishing portion 23 enables the lubricating grease to be injected through the oil injection hole of the oil-replenishing portion 23, for additional replenishment of the lubricating grease without removing the rotary shaft sleeve; and when the shaft of the cross-flow fan is mounted, the oil injection hole may ensure that air pressure inside and outside the buffering member 2 is the same, which is convenient for insertion and pulling out.

As illustrated in FIGS. 1-5, a first technical solution of the fixing member 3 in the rotary shaft sleeve for the cross-flow fan of the air conditioner is provided. The fixing member 3 includes a fixing sleeve 31 and a sleeve cover 32. The fixing sleeve 31 has a drum-shaped structure, i.e., a substantially cylindrical shape but with a cross section of the fixing sleeve 31 gradually decreasing from a middle part to both ends, and an outer side wall of the fixing sleeve 31 is clamped in the fixing cavity 211 through the plurality of second bosses. The sleeve cover 32 is arranged on a lower surface of the fixing sleeve 31. A second through hole is formed in a center of the fixing member 3 and has a diameter equal to a diameter of the first through hole. The second through hole runs through the fixing member 3. Three first oil storage bins 311 are arranged within the fixing sleeve 31 and in communication with the second through hole. The three first oil storage bins 311 are evenly arranged around the second through hole, and extend from a bottom surface of the fixing sleeve 31 to an interior of the fixing sleeve 31.

The working principle of the above technical solution is as follows: the fixing sleeve 31 is fixed in the fixing cavity 211; since the second bosses are arranged inside the fixing cavity 211, the fixing sleeve 31 is subjected to increased pressure and friction; when the shaft of the cross-flow fan is inserted into the fixing member 3, and slides and rotates in the fixing member 3, heat generated due to friction during rotation will melt the lubricating grease in the first oil storage bins 311, and the lubricating grease will flow to the shaft of the cross-flow fan through the communicated second through hole, to lubricate the shaft of the cross-flow fan, such that the shaft of the cross-flow fan may slide and rotate within the fixing member 3 without additional lubrication.

The above technical solution has the following beneficial effects. Through the above structural design, the shaft of the cross-flow fan can slide and rotate within the fixing member 3 without additional injection of the lubricating grease.

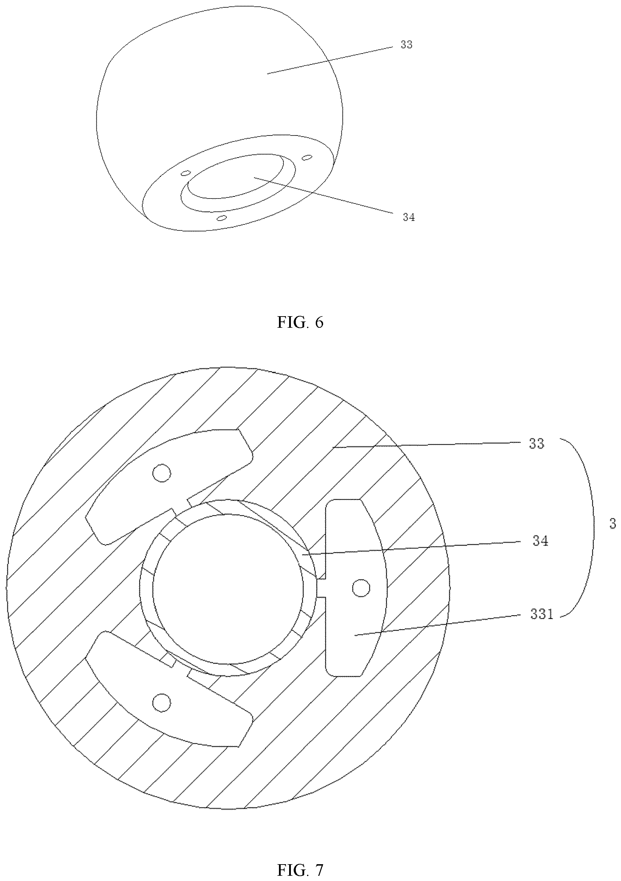

As illustrated in FIGS. 6-7, a second technical solution of the fixing member 3 in the rotary shaft sleeve for the cross-flow fan of the air conditioner is provided. The fixing member 3 includes an outer shaft sleeve 33 and an inner shaft sleeve 34. An outer shape of the outer shaft sleeve 33 is drum-shaped, i.e., a substantially cylindrical shape but with a cross section of the outer shaft sleeve 33 gradually decreasing from a middle part to both ends, and an outer side wall of the outer shaft sleeve 33 is clamped in the fixing cavity 211 through the plurality of second bosses. The inner shaft sleeve 34 is arranged in the outer shaft sleeve 33. The inner shaft sleeve 34 is of a circular tube structure and runs through the outer shaft sleeve 33. An inner diameter of the inner shaft sleeve 34 is equal to a diameter of the first through hole. The inner shaft sleeve 34 is slidably connected to the outer shaft sleeve 33. Three second oil storage bins 331 are arranged within the outer shaft sleeve 33 and in communication with an outer wall of the inner shaft sleeve 34. The three second oil storage bins 331 are evenly arranged around the inner shaft sleeve 34. Three oil-replenishing openings are arranged at a lower end of the outer shaft sleeve 33 and correspond to the second oil storage bins 331.

The working principle of the above technical solution is as follows: the outer shaft sleeve 33 is fixed in the fixing cavity 211; since the second bosses are arranged inside the fixing cavity 211, the outer shaft sleeve 33 is subjected to increased pressure and friction; the shaft of the cross-flow fan is inserted into and fixed with the inner shaft sleeve 34; when the shaft of the cross-flow fan rotates, the inner shaft sleeve 34 is driven to rotate together, and because of the heat generated due to friction, the lubricating grease in the second oil storage bins 331 inside the outer shaft sleeve 33 will melt and flow to the outer wall of the inner shaft sleeve 34, to achieve a lubrication effect; since the second oil storage bins 331 are sealed in the outer shaft sleeve 33 by the inner shaft sleeve 34, the volatilization and consumption of the lubricating grease will be far lower than that in the first technical solution; due to the sealed structure, it is impossible to replenish the lubricating grease through the oil-replenishing portion 23, and the fixing member 3 needs to be disassembled to implement the injection from the oil-replenishing openings corresponding to the second oil storage bins 331, if the lubricating grease needs to be replenished.

The above technical solution has the following beneficial effects. Through the above structural design, the outer shaft sleeve 33 and the inner shaft sleeve 34 are combined as a hydrostatic bearing system with a lubricating mechanism. Compared with traditional bearing systems, this solution has less sliding friction and extremely low loss of the lubricating grease.

In an embodiment, the clamping member 1 is made of plastics, the buffering member 2, the first bosses and the second bosses are all made of rubber, and the fixing member 3 is made of stainless steel.

The working principle and beneficial effects of the above technical solution are as follows. Through the above structural design, the clamping member 1 made of plastics can meet the existing requirements in hardness and plasticity; the buffering member 2, the first bosses and the second bosses made of rubber may have better elastic sealing performance and large enough friction coefficients to prevent the buffering member 2 from slipping relative to and separating from the first bosses and the second bosses; the fixing member 3 made of stainless steel has a small enough friction coefficient during sliding and good thermal conductivity, which can quickly transfer heat generated by rotation to the lubricating grease and accelerate melting of the lubricating grease, and moreover, the stainless steel material has long service life and better wear resistance.

In an embodiment, the fixing member 3 is in an interference fit with the fixing cavity 211, and the inserting portion 21 is in an interference fit with the clamping seat 11. The first oil storage bins 311 and the second oil storage bins 331 are filled with the lubricating grease.

The working principle and beneficial effects of the above technical solution are as follows. Through the above structural design, the interference fit between the fixing member 3 and the fixing cavity 211 may prevent the fixing member 3 from rotating in the fixing cavity 211, and similarly, the interference fit between the inserting portion 21 and the clamping seat 11 may prevent the inserting portion 21 from rotating and displacing in the clamping seat 11. It should be noted that the lubricating grease filled in the first oil storage bins 311 and the second oil storage bins 331 is a conventional lubricant, whose specific model will not be described in detail.

The present disclosure also provides an air conditioner. The air conditioner is equipped with a cross-flow fan, an end of the cross-flow fan is provided with a rotary shaft sleeve, and the rotary shaft sleeve is the above rotary shaft sleeve for the cross-flow fan of the air conditioner in the present disclosure.

The working principle and beneficial effects of the above technical solution are as follows. The rotary shaft sleeve in the present disclosure is arranged at one end of the cross-flow fan in the air conditioner, and can provide support, shock absorption and lubrication functions when the cross-flow fan rotates.

In the description of the present disclosure, it should be understood that, terms such as "central," "longitudinal," "transverse," "length," "width," "thickness," "upper," "lower," "front," "rear," "left," "right," "vertical," "horizontal," "top," "bottom," "inner," "outer," "clockwise", "counterclockwise", "axial," "radial", and "circumferential" indicate an orientation or a position relationship based on an orientation or a position relationship illustrated in the accompanying drawings, which is only for convenience and simplicity of descriptions, and does not indicate or imply that the device or element referred to must have a particular orientation or be constructed and operated in a specific orientation. Hence, these terms cannot be construed as limitation on the present disclosure.

In the present disclosure, it should be noted that, unless specified otherwise, terms "mounted," "coupled," "connected," and "fixed" should be understood broadly, the terms may indicate, for example, fixed connections, detachable connections, or integral connections, may also indicate mechanical or electrical connections or mutual communications, may also indicate direct connections or indirect connections via intermediate mediums, and may also indicate inner communication or interaction of two elements. The specific meanings of the terms in embodiments of the present disclosure may be understood by those skilled in the art according to particular circumstances.

Although embodiments of the present disclosure have been disclosed as above, the present disclosure is not limited to applications discussed in the description and the embodiments, and may be applied to various fields within the scope of the appended claims. For those familiar with the related art, other modifications may be easily achieved. Therefore, without departing from the scope defined by the annexed claims, the present disclosure is not limited to specific details and legends illustrated and described herein.

## Claims

1. A rotary shaft sleeve for a cross-flow fan of an air conditioner, comprising:
a clamping member (1) configured to be arranged in an indoor unit of the air conditioner;
a buffering member (2) arranged inside the clamping member (1); and
a fixing member (3) arranged inside the buffering member (2),
**characterized in that** the clamping member (1) comprises:
a clamping seat (11);
four clamping plates (12); and
four sloped stops (13) arranged on an inner wall of the clamping seat (11), a slope gradient of each sloped stop (13) increasing from top to bottom,
wherein the four sloped stops (13) are on a same horizontal plane and evenly distributed on the inner wall of the clamping seat (11); the clamping plates (12) are arranged on the inner wall of the clamping seat (11) and located below the sloped stops (13), and the four clamping plates (12) are on a same horizontal plane and evenly distributed on the inner wall of the clamping seat (11); the buffering member (2) is arranged in the clamping seat (11) and clamped with the sloped stops (13); and top surfaces of the clamping plates (12) are in contact with a bottom surface of the buffering member (2).

2. The rotary shaft sleeve according to claim 1, wherein the buffering member (2) comprises:
an inserting portion (21) inserted within the clamping seat (11), the fixing member (3) being arranged in the inserting portion (21);
a clamping portion (22), wherein a top surface of the clamping portion (22) is connected to a bottom surface of the inserting portion (21), a side wall of the clamping portion (22) is clamped with the four sloped stops (13), and a bottom surface of the clamping portion (22) is in contact with the top surfaces of the clamping plates (12); and
an oil-replenishing portion (23) arranged in a center of the bottom surface of the clamping portion (22).

3. The rotary shaft sleeve according to claim 2, wherein a plurality of first bosses are arranged on an outer side wall of the inserting portion (21), and the inserting portion (21) is inserted into the clamping seat (11) through the plurality of first bosses; the inserting portion (21) has a first through hole, and the first through hole runs through the inserting portion (21) and the clamping portion (22) and extends to an inner and lower bottom surface of the oil-replenishing portion (23).

4. The rotary shaft sleeve according to claim 3, wherein a plurality of buffering grooves are formed in an upper surface of the inserting portion (21), and surround an outer side of the first through hole with the first through hole as a center; a fixing cavity (211) is formed within the inserting portion (21), and the fixing cavity (211) is drum-shaped; a plurality of second bosses are arranged on an inner surface of the fixing cavity (211), and the fixing member (3) is clamped in the fixing cavity (211) by the plurality of the second bosses.

5. The rotary shaft sleeve according to any one of claims 2 to 4, wherein a clamping groove is arranged in an outer wall of the clamping portion (22), a lower part of the clamping groove is tapered inwards, and the four sloped stops (13) are clamped in the clamping groove;
the oil-replenishing portion (23) is cylindrical, a top surface of the oil-replenishing portion (23) is connected to the bottom surface of the clamping portion (22), and an oil injection hole is arranged in a bottom of the oil-replenishing portion (23).

6. The rotary shaft sleeve according to any one of claims 3 to 5, wherein the fixing member (3) comprises:
a fixing sleeve (31) having a drum-shaped structure, an outer side wall of the fixing sleeve (31) being clamped in the fixing cavity (211) through the plurality of second bosses; and
a sleeve cover (32) arranged on a lower surface of the fixing sleeve (31), wherein a second through hole is formed in a center of the fixing member (3), has a diameter equal to a diameter of the first through hole, and runs through the fixing member (3).

7. The rotary shaft sleeve according to claim 6, wherein three first oil storage bins (311) are arranged within the fixing sleeve (31) and in communication with the second through hole; the three first oil storage bins (311) are evenly arranged around the second through hole, and extend from a bottom surface of the fixing sleeve (31) to an interior of the fixing sleeve (31).

8. The rotary shaft sleeve according to any one of claims 3 to 5, wherein the fixing member (3) comprises:
an outer shaft sleeve (33), an outer shape of the outer shaft sleeve (33) being drum-shaped, and an outer side wall of the outer shaft sleeve (33) being clamped in the fixing cavity (211) through the plurality of second bosses; and
an inner shaft sleeve (34) arranged in the outer shaft sleeve (33), wherein the inner shaft sleeve (34) is of a circular tube structure and runs through the outer shaft sleeve (33), an inner diameter of the inner shaft sleeve (34) is equal to a diameter of the first through hole, and the inner shaft sleeve (34) is slidably connected to the outer shaft sleeve (33).

9. The rotary shaft sleeve according to claim 8, wherein three second oil storage bins (331) are arranged within the outer shaft sleeve (33) and in communication with an outer wall of the inner shaft sleeve (34); the three second oil storage bins (331) are evenly arranged around the inner shaft sleeve (34); and three oil-replenishing openings are arranged at a lower end of the outer shaft sleeve (33) and correspond to the second oil storage bins (331).

10. The rotary shaft sleeve according to any one of claims 3 to 9, wherein the clamping member (1) is made of plastics; the buffering member (2), the plurality of first bosses and the plurality of second bosses are all made of rubber; and the fixing member (3) is made of stainless steel.

11. The rotary shaft sleeve according to any one of claims 3 to 10, wherein the fixing member (3) is in an interference fit with the fixing cavity (211), and the inserting portion (21) is in an interference fit with the clamping seat (11).

12. The rotary shaft sleeve according to claim 7, wherein the first oil storage bins (311) are filled with lubricating grease.

13. The rotary shaft sleeve according to claim 9, wherein the second oil storage bins (331) are filled with lubricating grease.

14. An air conditioner comprising a cross-flow fan, wherein an end of the cross-flow fan is provided with the rotary shaft sleeve according to any one of claims 1 to 13.

## Patentansprüche

1. Drehwellenhülse für Querstromlüfter einer Klimaanlage, die aufweist:
ein Klemmelement (1), das dazu ausgebildet ist, in einer Innenraumeinheit der Klimaanlage angeordnet zu sein;
ein Pufferelement (2), das in dem Klemmelement (1) angeordnet ist; und
ein Befestigungselement (3), das in dem Pufferelement (2) angeordnet ist, **dadurch gekennzeichnet, dass** das Klemmelement (1) aufweist:
einen Klemmsitz (11);
vier Klemmplatten (12); und
vier geneigte Anschläge (13), die auf einer Innenwand des Klemmsitzes (11) angeordnet ist, wobei ein Neigungsgradient jedes geneigten Anschlags (13) von oben nach unten zunimmt,
wobei die vier geneigten Anschläge (13) auf einer gleichen horizontalen Ebene liegen und gleichmäßig auf der Innenwand des Klemmsitzes (11) verteilt sind; wobei die Klemmplatten (12) auf der Innenwand des Klemmsitzes (11) angeordnet sind und sich unterhalb der geneigten Anschläge (13) befinden, und die vier Klemmplatten (12) auf einer gleichen horizontalen Ebene liegen und gleichmäßig auf der Innenwand des Klemmsitzes (11) verteilt sind; wobei das Pufferelement (2) in dem Klemmsitz (11) angeordnet ist und mit den geneigten Anschlägen (13) festgeklemmt ist; und wobei die oberen Flächen der Klemmplatten (12) mit einer Bodenfläche des Pufferelements (2) in Kontakt sind.

2. Drehwellenhülse nach Anspruch 1, wobei das Pufferelement (2) aufweist:
einen Einsetzabschnitt (21), der in dem Klemmsitz (11) eingesetzt ist, wobei das Befestigungselement (3) in dem Einsetzabschnitt (21) angeordnet ist;
einen Klemmabschnitt (22), wobei eine obere Fläche des Klemmabschnitts (22) mit einer Bodenfläche des Einsetzabschnitts (21) verbunden ist, eine Seitenwand des Klemmabschnitts (22) mit den vierten geneigten Anschlägen (13) festgeklemmt ist, und eine Bodenfläche des Klemmabschnitts (22) mit den oberen Flächen der Klemmplatten (12) in Kontakt steht; und
einen Ölnachfüllabschnitt (23), der in einer Mitte der Bodenfläche des Klemmabschnitts (22) angeordnet ist.

3. Drehwellenhülse nach Anspruch 2, wobei eine Vielzahl von ersten Naben auf einer Außenseitenwand des Einsetzabschnitts (21) angeordnet sind, und der Einsetzabschnitt (21) durch die Vielzahl von ersten Naben in den Klemmsitz (11) eingesetzt ist; wobei der Einsetzabschnitt (21) ein erstes Durchgangsloch aufweist, und das erste Durchgangsloch durch den Einsetzabschnitt (21) und den Klemmabschnitt (22) verläuft und sich zu einer inneren und unteren Bodenfläche des Ölnachfüllabschnitts (23) erstreckt.

4. Drehwellenhülse nach Anspruch 3, wobei eine Vielzahl von Puffernuten in einer oberen Fläche des Einsetzabschnitts (21) ausgebildet sind und eine Außenseite des ersten Durchgangslochs umgeben, wobei das erste Durchgangsloch eine Mitte ist; wobei ein Befestigungshohlraum (211) in dem Einsetzabschnitt (21) ausgebildet ist, und der Befestigungshohlraum (211) trommelförmig ist; wobei eine Vielzahl von zweiten Naben auf einer Innenfläche des Befestigungshohlraums (211) angeordnet sind, und das Befestigungselement (3) durch die Vielzahl von zweiten Naben in dem Befestigungshohlraum (211) festgeklemmt ist.

5. Drehwellenhülse nach einem der Ansprüche 2 bis 4, wobei eine Klemmnut in einer Außenwand des Klemmabschnitts (22) angeordnet ist, ein unterer Teil der Klemmnut nach innen verjüngt ist, und die vier geneigten Anschläge (13) in der Klemmnut festgeklemmt sind;
wobei ein Ölnachfüllabschnitt (23) zylindrisch ist, eine obere Fläche des Ölnachfüllabschnitts (23) mit der Bodenfläche des Klemmabschnitts (22) verbunden ist, und ein Öleinspritzloch in einem Boden des Ölnachfüllabschnitts (23) angeordnet ist.

6. Drehwellenhülse nach einem der Ansprüche 3 bis 5, wobei das Befestigungselement (3) aufweist:
eine Befestigungshülse (31) mit einer trommelförmigen Struktur, wobei eine Außenseitenwand der Befestigungshülse (31) durch die Vielzahl von zweiten Naben in dem Befestigungshohlraum (211) festgeklemmt ist; und
eine Hülsenabdeckung (32), die auf einer unteren Fläche der Befestigungshülse (31) angeordnet ist, wobei ein zweites Durchgangsloch in einer Mitte des Befestigungselements (3) ausgebildet ist, einen Durchmesser aufweist,
der gleich einem Durchmesser des ersten Durchgangslochs ist, und durch das Befestigungselement (3) verläuft.

7. Drehwellenhülse nach Anspruch 6, wobei drei erste Ölspeicherbehälter (311) in der Befestigungshülse (31) angeordnet sind und mit dem zweiten Durchgangsloch in Verbindung stehen; wobei die drei ersten Ölspeicherbehälter (311) gleichmäßig um das zweite Durchgangsloch herum angeordnet sind und sich von einer Bodenfläche der Befestigungshülse (31) zu einem Innenraum der Befestigungshülse (31) erstrecken.

8. Drehwellenhülse nach einem der Ansprüche 3 bis 5, wobei das Befestigungselement (3) aufweist:
eine äußere Wellenhülse (33), wobei eine äußere Form der äußeren Wellenhülse (33) trommelförmig ist, und eine Außenseitenwand der äußeren Wellenhülse (33) durch die Vielzahl von zweiten Naben in dem Befestigungshohlraum (211) festgeklemmt ist; und
eine innere Wellenhülse (34), die in der äußeren Wellenhülse (33) angeordnet ist, wobei die innere Wellenhülse (34) eine kreisförmige Rohrstruktur aufweist und durch die äußere Wellenhülse (33) verläuft, ein Innendurchmesser der inneren Wellenhülse (34) gleich einem Durchmesser des ersten Durchgangslochs ist, und die innere Wellenhülse (34) gleitend verschiebbar mit der äußeren Wellenhülse (33) verbunden ist.

9. Drehwellenhülse nach Anspruch 8, wobei drei zweite Ölspeicherbehälter (331) in der äußeren Wellenhülse (33) angeordnet sind und mit einer Außenwand der inneren Wellenhülse (34) in Verbindung stehen; wobei die drei zweiten Ölspeicherbehälter (331) gleichmäßig um die innere Wellenhülse (34) herum angeordnet sind; und wobei die drei Ölnachfüllöffnungen an einem unteren Ende der äußeren Wellenhülse (33) angeordnet sind und den zweiten Ölspeicherbehältern (331) entsprechen.

10. Drehwellenhülse nach einem der Ansprüche 3 bis 9, wobei das Klemmelement (1) aus Kunststoff besteht; wobei das Pufferelement (2), die Vielzahl von ersten Naben und die Vielzahl von zweiten Naben alle aus Gummi bestehen; und wobei das Befestigungselement (3) aus Edelstahl besteht.

11. Drehwellenhülse nach einem der Ansprüche 3 bis 10, wobei das Befestigungselement (3) in einer Presspassung mit dem Befestigungshohlraum (211) ist, und der Einsetzabschnitt (21) in einer Presspassung mit dem Klemmsitz (11) ist.

12. Drehwellenhülse nach Anspruch 7, wobei die ersten Ölspeicherbehälter (311) mit Schmierfett gefüllt sind.

13. Drehwellenhülse nach Anspruch 9, wobei die zweiten Ölspeicherbehälter (331) mit Schmierfett gefüllt sind.

14. Klimaanlange, die einen Querstromlüfter aufweist, wobei ein Ende des Querstromlüfters mit Drehwellenhülse nach einem der Ansprüche 1 bis 13 versehen ist.

## Revendications

1. Manchon d'arbre rotatif pour un ventilateur tangentiel d'un climatiseur, comprenant :
un élément de serrage (1) conçu pour être disposé dans une unité intérieure du climatiseur ;
un élément tampon (2) disposé à l'intérieur de l'élément de serrage (1) ; et
un élément de fixation (3) disposé à l'intérieur de l'élément tampon (2),
**caractérisé en ce que** l'élément de serrage (1) comprend :
un siège de serrage (11) ;
quatre plaques de serrage (12) ; et
quatre butées inclinées (13) disposées sur une paroi interne du siège de serrage (11), un gradient de pente de chaque butée inclinée (13) augmentant de haut en bas,
dans lequel les quatre butées inclinées (13) sont sur un même plan horizontal et réparties uniformément sur la paroi interne du siège de serrage (11) ; les plaques de serrage (12) sont disposées sur la paroi interne du siège de serrage (11) et situées en dessous des butées inclinées (13), et les quatre plaques de serrage (12) sont sur un même plan horizontal et réparties uniformément sur la paroi interne du siège de serrage (11) ; l'élément tampon (2) est disposé dans le siège de serrage (11) et serré avec les butées inclinées (13) ; et des surfaces supérieures des plaques de serrage (12) sont en contact avec une surface inférieure de l'élément tampon (2).

2. Manchon d'arbre rotatif selon la revendication 1, dans lequel l'élément tampon (2) comprend :
une partie d'insertion (21) insérée à l'intérieur du siège de serrage (11), l'élément de fixation (3) étant disposé dans la partie d'insertion (21) ;
une partie de serrage (22), dans lequel une surface supérieure de la partie de serrage (22) est liée à une surface inférieure de la partie d'insertion (21), une paroi latérale de la partie de serrage (22) est serrée avec les quatre butées inclinées (13), et une surface inférieure de la partie de serrage (22) est en contact avec les surfaces supérieures des plaques de serrage (12) ; et
une partie de réapprovisionnement en huile (23) disposée dans un centre de la surface inférieure de la partie de serrage (22).

3. Manchon d'arbre rotatif selon la revendication 2, dans lequel une pluralité de premiers bossages sont disposés sur une paroi latérale externe de la partie d'insertion (21), et la partie d'insertion (21) est insérée dans le siège de serrage (11) à travers la pluralité de premiers bossages ; la partie d'insertion (21) a un premier trou traversant, et le premier trou traversant passe à travers la partie d'insertion (21) et la partie de serrage (22) et s'étend jusqu'à une surface de fond inférieure et interne de la partie de réapprovisionnement en huile (23).

4. Manchon d'arbre rotatif selon la revendication 3, dans lequel une pluralité de rainures tampon sont formées dans une surface supérieure de la partie d'insertion (21), et entourent un côté externe du premier trou traversant avec le premier trou traversant en tant que centre ; une cavité de fixation (211) est formée à l'intérieur de la partie d'insertion (21), et la cavité de fixation (211) est en forme de tambour ; une pluralité de seconds bossages sont disposés sur une surface interne de la cavité de fixation (211), et l'élément de fixation (3) est serré dans la cavité de fixation (211) par la pluralité des seconds bossages.

5. Manchon d'arbre rotatif selon l'une quelconque des revendications 2 à 4, dans lequel une rainure de serrage est disposée dans une paroi externe de la partie de serrage (22), une partie inférieure de la rainure de serrage est effilée vers l'intérieur, et les quatre butées inclinées (13) sont serrées dans la rainure de serrage ;
la partie de réapprovisionnement en huile (23) est cylindrique, une surface supérieure de la partie de réapprovisionnement en huile (23) est reliée à la surface de fond de la partie de serrage (22), et un trou d'injection d'huile est disposé dans un fond de la partie de réapprovisionnement en huile (23).

6. Manchon d'arbre rotatif selon l'une quelconque des revendications 3 à 5, dans lequel l'élément de fixation (3) comprend :
un manchon de fixation (31) ayant une structure en forme de tambour, une paroi latérale externe du manchon de fixation (31) étant serrée dans la cavité de fixation (211) à travers la pluralité de seconds bossages ; et
un couvercle de manchon (32) disposé sur une surface inférieure du manchon de fixation (31), dans lequel un second trou traversant est formé dans un centre de l'élément de fixation (3), a un diamètre égal à un diamètre du premier trou traversant, et passe à travers l'élément de fixation (3).

7. Manchon d'arbre rotatif selon la revendication 6, dans lequel trois premiers bacs de stockage d'huile (311) sont disposés à l'intérieur du manchon de fixation (31) et en communication avec le second trou traversant ; les trois premiers bacs de stockage d'huile (311) sont disposés uniformément autour du second trou traversant, et s'étendent depuis une surface de fond du manchon de fixation (31) jusqu'à un intérieur du manchon de fixation (31).

8. Manchon d'arbre rotatif selon l'une quelconque des revendications 3 à 5, dans lequel l'élément de fixation (3) comprend :
un manchon d'arbre externe (33), une forme externe du manchon d'arbre externe (33) étant en forme de tambour, et une paroi latérale externe du manchon d'arbre externe (33) étant serrée dans la cavité de fixation (211) à travers la pluralité de seconds bossages ; et
un manchon d'arbre interne (34) disposé dans le manchon d'arbre externe (33), dans lequel le manchon d'arbre interne (34) est d'une structure de tube circulaire et traverse le manchon d'arbre externe (33), un diamètre interne du manchon d'arbre interne (34) est égal à un diamètre du premier trou traversant, et le manchon d'arbre interne (34) est relié de manière coulissante au manchon d'arbre externe (33).

9. Manchon d'arbre rotatif selon la revendication 8, dans lequel trois seconds bacs de stockage d'huile (331) sont disposés à l'intérieur du manchon d'arbre externe (33) et en communication avec une paroi externe du manchon d'arbre interne (34) ; les trois seconds bacs de stockage d'huile (331) sont disposés uniformément autour du manchon d'arbre interne (34) ; et trois ouvertures de réapprovisionnement en huile sont disposées au niveau d'une extrémité inférieure du manchon d'arbre externe (33) et correspondent aux seconds bacs de stockage d'huile (331).

10. Manchon d'arbre rotatif selon l'une quelconque des revendications 3 à 9, dans lequel l'élément de serrage (1) est en plastique ; l'élément tampon (2), la pluralité de premiers bossages et la pluralité de seconds bossages sont tous en caoutchouc ; et l'élément de fixation (3) est en acier inoxydable.

11. Manchon d'arbre rotatif selon l'une quelconque des revendications 3 à 10, dans lequel l'élément de fixation (3) est en ajustement serré avec la cavité de fixation (211), et la partie d'insertion (21) est en ajustement serré avec le siège de serrage (11).

12. Manchon d'arbre rotatif selon la revendication 7, dans lequel les premiers bacs de stockage d'huile (311) sont remplis de graisse lubrifiante.

13. Manchon d'arbre rotatif selon la revendication 9, dans lequel les seconds bacs de stockage d'huile (331) sont remplis de graisse lubrifiante.

14. Climatiseur comprenant un ventilateur tangentiel, dans lequel une extrémité du ventilateur tangentiel est pourvue du manchon d'arbre rotatif selon l'une quelconque des revendications 1 à 13.
